# EUROPEAN PATENT SPECIFICATION

(11) **EP 3 009 560 B1**
(45) Date of publication and mention of the grant of the patent: **07.04.2021**
(21) Application number: 15189668.5
(22) Date of filing: 14.10.2015
(51) Int. Cl.: D07B 1/06, D07B 5/00, D07B 7/02

(54) **METHOD OF MANUFACTURING A STEEL CORD FOR A TIRE REINFORCEMENT**
VERFAHREN ZUR HERSTELLUNG EINES STAHLSEILS ZUR REIFENVERSTÄRKUNG
PROCÉDÉ DE FABRICATION D'UN CÂBLE D'ACIER DE RENFORCEMENT DE PNEU

(30) Priority: 14.10.2014 KR 20140138587
(43) Date of publication of application: 20.04.2016
(73) Proprietor: Hongduk Industrial Co., Ltd., Gyeongsangbuk-do 37871 (KR)
(72) Inventor: Lee, Byung Ho, 37650 Pohang-si, Gyeongsangbuk-do (KR); Lee, Kwang Jin, 37665 Pohang-si, Gyeongsangbuk-do (KR); Kim, Do Hun, 39292 Gumi-si, Gyeongsangbuk-do (KR)
(74) Representative: Steiniger, Carmen

(56) References cited:
- EP-A1- 0 791 682
- EP-A1- 2 845 749
- EP-A2- 0 264 071
- WO-A1-97/34043
- GB-A- 1 085 133
- JP-A- S5 351 804
- JP-A- 2001 234 486
- JP-A- 2014 234 571
- KR-A- 20100 006 070
- KR-A- 20140 068 703
- US-A- 2 019 519
- US-A- 4 606 392

## Description

### BACKGROUND

### 1. Field

One or more exemplary embodiments relate to a steel cord for a tire reinforcement, and more particularly, to a steel cord for a tire reinforcement including a middle strand and an upper strand, which have an m+n structure, wherein the middle strand includes a plurality of core wires each including a flat surface extending in a length direction on at least one portion, at least portions of the core wires comes into surface contact with each other through the flat surface, the plurality of core wires extend in parallel to each other, and the upper strand is stranded and cold-rolled to improve fatigue resistance, rubber permeability, and reliability.

### 2. Description of the Related Art

Recently, in the field of tires, there has been a need for weight reduction for saving resources, long durability, and high functionalities such as excellent cornering, and improved ride comfort.

A steel cord for a tire reinforcement has excellent characteristics in terms of strength, modulus, a heat resistance, a fatigue resistance, and adhesiveness to rubber, as compared to various types of reinforcement materials used for reinforcing various rubber goods, including a tire for a vehicle and a belt for industrial use. Due to these excellent characteristics, the steel cord for the tire reinforcement has been widely used as a member suitable for meeting the above-described high functionalities required for tires, and the use of the steel cord for the reinforcement has continued to increase.

In order to further improve the above-described high functionalities required for the tires, there is a need to develop a thin and light steel cord for a tire reinforcement having excellent characteristics in terms of modulus, a heat resistance, a heat transfer coefficient, a fatigue resistance, and rubber adhesiveness.

In an existing steel cord for a tire reinforcement having a strand structure (1×n), element wires forming the steel cord generally have a circular cross-section, and a contact between the element wires is a point contact or line contact, the element wires are likely to be damaged when friction between the element wires occurs. Korean Patent Publication KR 2014-0068703 includes a middle strand; and an upper strand that surrounds an outer circumferential surface of the middle strand so as to have an m+n structure, wherein the middle strand includes a plurality of core wires extending in parallel without being stranded with each other, each of the plurality of core wires has a flat surface on a portion in which the plurality of the core wires come into contact with each other, and the plurality of core wires come into surface contact with each other through the flat surface. And, in WO 1997-034043, a steel cord consists of a first group and a second group. The first group comprises two or more plastically deformed outer steel filaments twisted around each other with a first twist pitch and the second group comprises one or more plastically deformed inner steel filaments twisted around each other with a second twist pitch. The second group is twisted around the first group with a cord twist pitch. One of the inner or outer steel filaments having a part load elongation of x %, all the other inner and outer steel filaments have a part load elongation of y %, whereby x and y fulfil the equation: x0.10≤ y≤x +0.10. All the inner and outer steel filaments have a deforming pitch that is substantially equal to the cord twist pitch. But in the KR 2014-0068703 and WO 1997-034043, the retaining of the structure of the middle strand including the core wires having the flat surface is not disclosed.

### SUMMARY

**One** or more exemplary embodiments include a steel cord for a tire reinforcement, wherein each of core wires constituting a middle strand has a flat surface to form a surface contact between the core wires, to improve a fatigue resistance and rubber permeability of the steel cord for the tire reinforcement, increase a life span by preventing moisture and corrosion from spreading inside the steel cord, improve productivity, and improve user convenience.

Additional aspects will be set forth in part in the description which follows and, in part, will be apparent from the description, or may be learned by practice of the presented embodiments.

According to one or more exemplary embodiments, a steel cord for a tire reinforcement having a non-circular cross-section include: a middle strand; and an upper strand that surrounds an outer circumferential surface of the middle strand so as to have an m+n structure, wherein the middle strand includes a plurality of core wires, each of the plurality of core wires have a flat surface on a portion in which the plurality of the core wires come into contact with each other, and the plurality of core wires come into surface contact with each other through the flat surface, and wherein the upper strand includes about 2 to about 20 element wires, and the element wires are stranded so as to surround the outer circumferential surface of the middle strand with respect to a central axis, that is, an axis of a length direction of the middle strand.

The plurality of core wires constituting the middle strand may be stranded so as to be twisted to each other.

Each of the plurality of core wires may have a cross-section that is perpendicular to the length direction, the cross section may have a non-circular shape that has a large diameter and a small diameter, and the large diameter may be about 1.05 times to about 3 times greater than the small diameter.

As the steel cord is cold-rolled, at least one of the element wires and the plurality of the core wires may have a flat surface that is formed on at least a portion thereof.

The element wires and the plurality of core wires may have a diameter of about 0.08 mm to about 0.5 mm, and may have a tensile strength of about 280 kgf/mm² to about 450 kgf/mm².

The steel cord for the tire reinforcement may have any one of a multilayer-stranded structure, a multi-stranded structure, and a multiple-layer stranded structure.

According to one or more exemplary embodiments, a method of manufacturing a steel cord for a tire reinforcement including a middle strand formed by stranding a plurality of core wires and disposed in a core region inside the steel cord and an upper strand formed by stranding a plurality of element wires and stranded on an outer surface of the middle strand, includes: twisting the plurality of element wires constituting the upper strand by rotating a rotary wheel of an upper strand supplier; untwisting the plurality of the twisted element wires in an untwisting machine to form the element wires having a preforming having a predetermined pitch; and supplying the middle strand in a middle strand supplier that does not rotate and stranding the element wires having the preforming on the middle strand to form the upper strand on the middle strand, so that the middle strand is bunched with the upper strand without torsion.

The supplying of the middle strand includes: forming the middle strand by stranding the plurality of core wires; and forming a flat surface between the plurality of core wires by pressurizing the middle strand.

According to one or more exemplary embodiments, a method of manufacturing a steel cord for a tire reinforcement including a middle strand formed by a plurality of core wires and disposed in a core region inside the steel cord and an upper strand formed by stranding a plurality of element wires and stranded on an outer surface of the middle strand, includes: twisting the plurality of element wires constituting the upper strand by rotating a rotary wheel of an upper strand supplier; untwisting the plurality of the twisted element wires in an untwisting machine to form the element wires having a preforming having a predetermined pitch; forming a flat surface at the plurality of core wires by rolling each of the plurality of core wires, wherein the flat surface is a region having an infinite curvature or having a radius of curvature that is greater than a radius of curvature of other regions; forming the middle strand including the plurality of core wires coming into surface contact with each other through the flat surface and extending in parallel to each other; and supplying the middle strand in a middle strand supplier that does not rotate and stranding the element wires having the preforming on the middle strand to form the upper strand on the middle strand, so that the middle strand is bunched with the upper strand without torsion.

### BRIEF DESCRIPTION OF THE DRAWINGS

These and/or other aspects will become apparent and more readily appreciated from the following description of the embodiments, taken in conjunction with the accompanying drawings in which:
FIG. 1A is an exploded view of a steel cord for a tire reinforcement, according to an exemplary embodiment;
FIG. 1B is an exploded view of a steel cord for a tire reinforcement, according to an exemplary embodiment;
FIGS. 2A and 2B are cross-sectional views of the steel cord for the tire reinforcement, according to the exemplary embodiment;
FIGS. 3A and 3B are cross-sectional views of the steel cord for the tire reinforcement, according to the exemplary embodiment;
FIGS. 4A and 4B are diagrams for describing methods of manufacturing a steel cord for a tire reinforcement, according to an exemplary embodiment;
FIG. 5 is a cross-sectional view of a multilayer-stranded structure including the steel cord for the tire reinforcement, according to the exemplary embodiment;
FIG. 6 is a cross-sectional view of a multi-stranded structure including the steel cord for the tire reinforcement, according to the exemplary embodiment;
FIG. 7 is a cross-sectional view of a multiple-layer stranded structure including the steel cord for the tire reinforcement, according to the exemplary embodiment;
FIG. 8 is a partial cross-sectional view of a tire including the steel cord for the tire reinforcement, according to the exemplary embodiment; and
FIG. 9 is a partial enlarged view of a region illustrated in FIG. 8.

### DETAILED DESCRIPTION

Hereinafter, exemplary embodiments of the inventive concept will be described with reference to the accompanying drawings. The inventive concept may, however, be embodied in many different forms and should not be construed as being limited to the exemplary embodiments set forth herein; rather, these exemplary embodiments are provided so that this disclosure will be thorough and complete, and will fully convey the inventive concept to those of ordinary skill in the art. It should be understood, however, that there is no intent to limit the inventive concept to the particular forms disclosed, but on the contrary, the inventive concept is to cover all modifications falling within the scope of the inventive concept. Expressions such as "at least one of" when preceding a list of elements, modify the entire list of elements and do not modify the individual elements of the list.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the member in use or operation in addition to the orientation depicted in the figures. For example, if the member in the figures is turned over, elements described as "below" or "beneath" other elements or features would then be oriented "above" the other elements or features. Thus, the exemplary term "below" can encompass both an orientation of above and below. The member may be otherwise oriented and the spatially relative descriptors used herein may be interpreted accordingly.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises" and/or "comprising," when used in this specification, specify the presence of stated elements, but do not preclude the presence or addition of one or more other elements.

Unless otherwise defined, all terms (including technical and scientific terms) used herein have the same meaning as commonly understood by one of ordinary skill in the art to which example embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

In the drawings, the dimensions of structures are exaggerated for clarity of the inventive concept. The size and area of each element may be different from an actual size and area.

In addition, the directions mentioned at the time of describing the structure of the inventive concept are based on the directions illustrated in the drawings. In the descriptions about the structure of the inventive concept, when a reference point and a positional relationship are not clearly defined, the relevant drawings will be referenced.

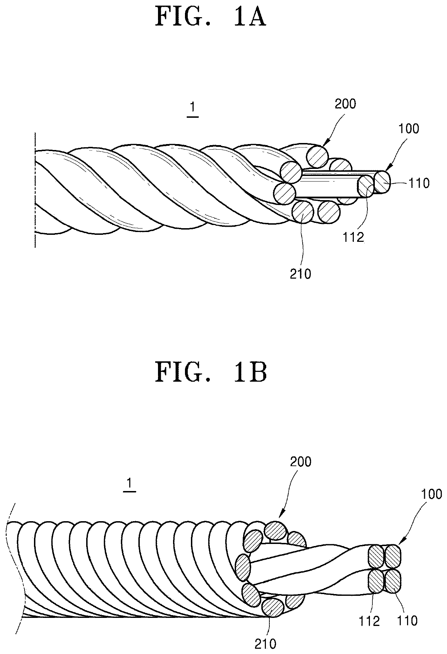

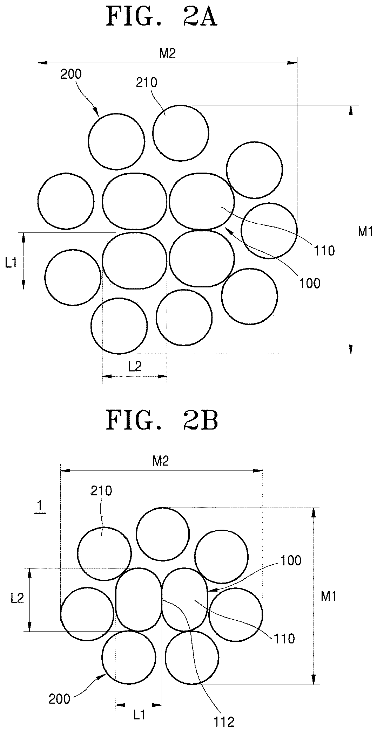

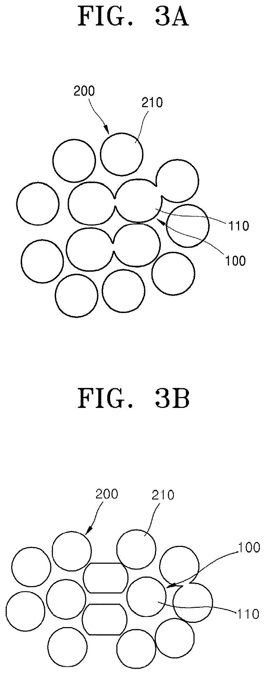

FIG. 1A and 1B is an exploded view of a steel cord 1 for a tire reinforcement, according to an exemplary embodiment, FIGS. 2A and 2B are cross-sectional views of the steel cord 1 for the tire reinforcement, according to the exemplary embodiment, and FIGS. 3A and 3B are cross-sectional views of the steel cord 1 for the tire reinforcement, according to the exemplary embodiment.

Referring to FIGS. 1A to 3B, the steel cord 1 for the tire reinforcement includes a middle strand 100 disposed in a core region inside the steel cord 1 and an upper strand 200 configured to surround an outer circumferential surface of the middle strand 100.

The middle strand 100 includes a plurality of core wires 110. The core wires 110 includes about 4 wires as illustrated in FIG. 1B and may include about 2 wires to 7 wires. However, the number of the core wires 110 is not limited thereto.

The core wires 110 includes, for example, a metal material that has predetermined hardness and elasticity and may have a structure in which brass is plated on a surface of a high tension steel wire.

Each of the core wires 110 includes a flat surface 112 that extends in a length direction at a portion thereof. The flat surface 112 may be a region that has a large radius of curvature compared to other regions and may include a region that has a general flat surface having an infinite curvature as well as a region that is roughly flatly formed due to a very larger curvature than a curvature of other regions when viewed from a diametric directional cross-section. Therefore, the term "flat surface" includes a region having a fully flat surface as well as all of regions having a radius of curvature that is greater than a radius of curvature of other regions.

The flat surface 112 is formed, for example, through a predetermined rolling process. That is, the flat surface 112 is formed by bunching several element wires and rolling adjacent element wires in a rolling direction by using a rolling roller. However, the flat surface 112 may be formed through other processes in addition to the rolling process but is not limited thereto. In addition, the flat surface 112 formed through the rolling process as well as all shapes of flat cross-sections may be formed. The exemplary embodiment is not limited to the flat surface 112 illustrated in FIG. 1.

As the flat surface 112 is formed on each of the core wires 110 constituting the middle strand 100, a contact surface may be achieved between the core wires 110. That is, as illustrated in FIGS. 1 to 2B, the core wires 110 may come into contact with each other through the flat surface 112, so that the surface contact may be achieved between the core wires 110.

In addition, as illustrated in FIGS. 1B, in some exemplary embodiments, the core wires 110 constituting the middle strand 100 is stranded with each other to have a twisted shape. That is, the middle strand100 has a twisted structure in which several core wires 110 are stranded with each other. At this time, the twisted structure of the middle strand 100 is formed by preparing and stranding several core wires 110 and rolling the stranded core wires 110 to form the flat surface 112. That is, the flat surface 112 is formed by rolling the stranded core wires 110 so as to pressurize each other.

Therefore, the core wires 110 are stranded so as to be twisted to each other and concurrently, maintain a surface contact state therebetween through the flat surface 112. The surface contact may mean a case where the core wires 110 come into contact with each other through the flat surface 112 so as to have an area and may include a case where the core wires 110 fully come into contact with each other, may include a case where the core wires 110 are partially spaced a predetermined distance apart from each other or a case where a flat surface and a curved surface rather than fully flat surfaces are come into contact with each other, and may include a case in which the core wires 110 obliquely come into contact with each other.

In some exemplary embodiments, as illustrated in FIGS. 1A, the core wires 110 are not be twisted to each other and extend in parallel to each other. That is, as illustrated in FIG. 1A, two core wires 110 constitute the middle strand 100 and extend so as not to be twisted to each other. After the two core wires 110 are rolled, the two core wires 110 are introduced without twisting.

In addition, as illustrated in FIG. 2A, the flat surface 112 may be formed on at least a portion of each of the core wires 110, and each of the core wires 110 may include a portion that does not partially have a flat surface. However, the exemplary embodiment is not limited thereto. Therefore, each of the core wires 110 may not fully come into surface contact with each other but may at least partially come into contact with each other.

The upper strand 200 is configured to surround the outer circumferential surface of the middle strand 100.

The upper strand 200 includes a plurality of element wires 210, and the element wires 210 are stranded so as to surround the outer circumferential surface of the middle strand 100 with respect to a central axis that is an axis of a length direction of the middle strand 100. That is, the plurality of element wires 210 are twisted so as to surround the outer circumferential surface of the middle strand 100 with respect to the axis of the length direction of the middle strand 100, so that the upper strand 200 is formed.

**An** in-out double twist special buncher may be used to form the upper strand 200. In the in-out double twist special buncher, a middle strand supplier may be disposed inside the in-out double twist special buncher, and a take-up machine may be disposed outside the in-out double twist special buncher.

In a case where the upper strand 200 is formed by using the in-out double twist special buncher, the element wires 210 constituting the upper strand 200 may be stranded at a constant pitch to have primary twisting, may be untwisted by using an untwisting machine, and may be secondarily stranded on the outer circumferential surface of the middle strand 100. As the element wires 210 constituting the upper strand 200 are primarily stranded, are untwisted, and are stranded on the outer circumferential surface of the middle strand 100, the element wires 210 may be stranded on the middle strand 100 in a state in which the element wires 210 have a preforming having the predetermined pitch.

At this time, at the time of stranding the upper strand 200, the middle strand 100 and the upper strand 200 may be bunched together without torsion of the middle strand 100, and as the element wires 210 constituting the upper strand 200 are stranded at a same twisting factor according to a time, the element wires 210 may constitute a stable shape. That is, as the middle strand 100 having the flat surface 112 is supplied without torsion, a shape of the middle strand 100 may not be collapsed, so that a multilayer-stranded flat cord having a stable structure may be manufactured.

Each of the element wires 210 constituting the upper strand 200 may also have a flat surface 112. The flat surface 112 of each of the element wires 210 in the upper strand 200 may be formed by, for example, stranding the element wires 210 constituting the upper strand 200 on the outer circumferential surface of the middle strand 100 and cold-rolling the steel cord 1 for the tire reinforcement according to the exemplary embodiment. As the cold-rolling process is performed, a cross-section of the steel cord 1 for the tire reinforcement according to the exemplary embodiment may have a non-circular shape. For example, as illustrated in FIGS. 2A and 2B, the cross-section of the steel cord 1 for the tire reinforcement may have a large diameter M2 and a small diameter M1.

In addition, the upper strand 200 may have a multilayer-stranded structure including several layers that include the plurality of element wires 210. At this time, stranding directions of the element wires 210 in the layers may be substantially identical to or different from each other, but are not limited thereto.

The core wires 110 constituting the middle strand 100 and the element wires 210 constituting the upper strand 200 may include different materials or may have different diameters and different tensile strengths but are limited thereto.

As the flat surface 112 are formed on each of the core wires 110, each of the flat surfaces 112 may have a small diameter L1 and a large diameter L2. A ratio of the large diameter L2 of the core wire 110 to the small diameter L1 thereof may be in the range of about 1.05 to about 3. That is, the large diameter L2 may be about 1.05 times to about 3 times greater than the small diameter L1. When the ratio of the large diameter L2 to the small diameter L1 is less than about 1.05, an area of the flat surface 112 may be decreased, so that the surface contact between the core wires 110 may not be achieved through flattening. On the contrary, when the ratio of the large diameter L2 to the small diameter L1 is greater than about 3, since the rolling process may be excessively performed to increase damage of the core wires 110, it may be difficult to obtain a fatigue resistance that is a feature of the exemplary embodiment.

According to the exemplary embodiment, each of the core wires 110 and element wires 210 constituting the steel cord 1 for the tire reinforcement may have a diameter of about 0.08 mm to about 0.5 mm. The core wires 110 may have a diameter that includes the large diameter L2 and the small diameter L1, and the large diameter L2 may be a maximum of about 0.5 mm and the small diameter L1 may be a minimum of about 0.08 mm. For example, when the diameter of each of the core wires 110 and the element wires 210 is less than 0.08 mm or greater than about 0.5 mm, a structure and a process of the steel cord 1 for the tire reinforcement may be difficult, and the structure of the steel cord 1 for the tire reinforcement may be ununiform.

Each of the core wires 110 and the element wires 210 may have a tensile strength of about 280 kgf/mm² to about 450 kgf/mm². For example, when the tensile strength exceeds about 450 kgf/mm², a hardness of a material may excessively increase, a wire may be easily cut during processing, and accordingly, the productivity of the steel cord 1 for the tire reinforcement may decrease.

Hereinafter, an effect of the steel cord 1 for the tire reinforcement having the above-described structure will be described in more detail.

The steel cord 1 for the tire reinforcement, according to the exemplary embodiment, has the flat surface 112 formed by extending the core wires 110 constituting the middle strand 100 in a length direction thereof, and the core wires 110 are more uniformly disposed by disposing the core wires 110 so as to come into surface contact with each other through the flat surface 112. That is, as a contact area between the plurality of core wires 110 increases through the surface contact, a structure of the middle strand 100 may be more easily formed. In addition, the reliability of the steel cord 1 for the tire reinforcement may be improved by preventing the core wires 110 constituting the middle strand 100 from deviating from an appropriate position in subsequent processes such as a storing process and a using process including a process of stranding the upper strand 200.

Furthermore, a fretting phenomenon caused by a contact between the element wires 210 may be minimized by minimizing a movement of the core wires 110 inside a tire at the time of driving a vehicle. In addition, the steel cord 1 for the tire reinforcement may be prevented from being separated from rubber by minimizing a dynamic load applied to an adhesion interface layer due to the movement of the element wires 210.

In addition, the core wires 110 and the element wires 210 constituting the steel cord 1 for the tire reinforcement may be more uniformly disposed by disposing the core wires 110 so as to come into surface contact with each other through the flat surface 112.

Furthermore, other materials may easily permeate spaces between the core wires 110 and the element wires 210, the spaces being formed inside the steel cord 1 for tire reinforcement in a length direction thereof. For example, when the steel cord 1 for tire reinforcement is used as a tire reinforcing material, rubber may uniformly permeate the spaces between the core wires 110 and the element wires 210, the spaces being formed inside the steel cord 1 for tire reinforcement. Therefore, fatigue characteristics of the steel cord 1 for tire reinforcement may be improved. In addition, permeability of rubber may be increased without an increase in low load elongation to prevent moisture or salt water from permeating between the element wires 210, thereby preventing damage of an adhesion interface between the rubber and the steel cord 1 for tire reinforcement.

According to the exemplary embodiment, as illustrated in FIGS. 2A and 2B, due to the surface contact between the core wires 110, the steel cord 1 for the tire reinforcement, which includes the middle strand 100 including the core wires 110, may have a non-circular cross-section. Therefore, the steel cord 1 for the tire reinforcement, according to the exemplary embodiment, may have the small diameter M1 and the large diameter M2. For example, when the steel cord 1 for the tire reinforcement, according to the exemplary embodiment, is embedded in a rubber sheet (not illustrated) in a small diameter M1 direction, it may be possible to reduce a thickness of the rubber sheet (not illustrated) without a significant reduction in strength compared to a circular steel cord for a tire reinforcement, thereby lightening the tire.

In addition, in comparison with a commonly used 3+9+15×0.22+1 HT structure, the number of element wires and the number of processes may be decreased within a similar tensile strength, thereby further reducing manufacturing costs.

Furthermore, since the steel cord 1 for the tire reinforcement, according to the exemplary embodiment, has the non-circular cross-section, the steel cord 1 for the tire reinforcement may have a low bending strength in the small diameter M1 direction and a high bending strength in a large diameter M2 direction. Therefore, a placement of the steel cord 1 for the tire reinforcement may be changed according to a user's selection, thereby obtaining a plurality of effects with one steel cord 1 for the tire reinforcement. For example, when the steel cord 1 for tire reinforcement, according to the exemplary embodiment, is used to reinforce a tire, a tire, which allows a riding quality to be improved and cornering to be stable, may be implemented according to the placement of the steel cord 1 for the tire reinforcement. This will be described later.

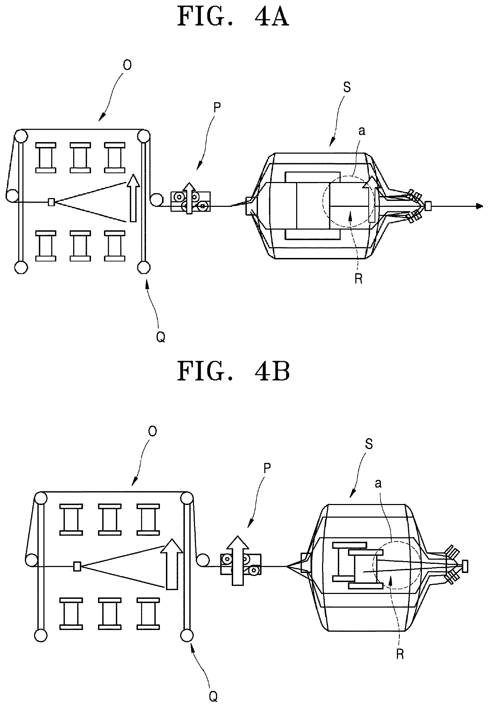

FIGS. 4A and 4B are diagrams for describing methods of manufacturing a steel cord 1 for a tire reinforcement, according to an exemplary embodiment.

Processes of manufacturing the steel cord 1 for the tire reinforcement described later are mere examples but are not limited thereto. For example, the processes may include a separate process therebetween. However, the exemplary embodiment is not limited thereto.

Referring to FIG. 4A, a plurality of core wires 110 may be bunched together, may be supplied to a rolling mill, and may be rolled by the rolling mill. As described above, the core wires 110 may have a structure in which brass is plated on a surface of a high tension steel wire. In addition, the core wires 110 may be stranded so as to be twisted to each other to constitute a middle strand 100.

The middle strand 100 formed by stranding the stranded core wires 110 may be rolled by the rolling mill to form a flat surface 112 on at least portion of each of the core wires 110. A rolling process may be performed by disposing the core wires 110 between predetermined rolling rollers R and rolling the core wires 110. As the core wires 110 come into contact with each other to be rolled while the core wires 110 pass between the rolling rollers R, the flat surface 112 may be formed in a portion in which the core wires110 are pressed to each other and may extend in a length direction of the core wire 110. As described above, a ratio of a large diameter of the core wire 110 to a small diameter thereof may be in the range of about 1.05 to about 3 and may be adjusted by adjusting a gap between the rolling rollers R or a material of the rolling roller R.

**As** described above, the core wires 110 constituting the middle strand 100 come into surface contact with each other through the flat surface 112 that is formed through the rolling process. Therefore, a placement between the core wires 110 may be more easily performed compared to a case of a placement of core wires having a circular cross-section, thereby improving process efficiency.

A plurality of element wires 210 is stranded on an outer circumferential surface of the middle strand 100 including the core wires 110 to form an upper strand 220.

The element wires 210 may have a dimension different from a dimension of the core wires 110 as described above but is not limited thereto. The element wires 210 stranded on the outer circumferential surface of the middle strand 100 may be provided in plurality having any value but are not limited thereto. As the plurality of element wires 210 are stranded on the outer circumferential surface of the middle strand 100, the upper strand 200 may be formed. Accordingly, the steel cord 1 for the tire reinforcement, according to the exemplary embodiment, may have an m+n structure.

As described above, an in-out double twist special buncher may be used to form the upper strand 200. In the in-out double twist special buncher, a middle strand supplier may be disposed inside the in-out double twist special buncher, and a take-up machine may be disposed outside the in-out double twist special buncher. In addition, the middle strand 100 and the upper strand 200 may be bunched together without torsion of the middle strand 100 at the time of stranding, and as the element wires 210 constituting the upper strand 200 are stranded at a same twisting factor according to a time, the element wires 210 may constitute a stable shape. That is, as the middle strand 100 having the flat surface 112 is supplied without torsion, a shape of the middle strand 100 may not be collapsed, so that a multilayer-stranded flat cord may be manufactured.

A stranding principle of the upper strand 200 and the middle strand 100 will be described in detail as follows.

Referring to FIG. 4A, the element wires 210 constituting the upper strand 200 are twisted by rotation of a rotary wheel Q of an upper strand supplier O. The element wires 210 constituting the upper strand 200 may be stranded at a maximum pitch. Accordingly, the element wires 210 may be primarily twisted to each other at a constant pitch, and a predetermined preforming may be formed on an individual element wire 210 through the twisting.

The stranded element wires 210 are untwisted by an untwisting machine P. The element wires 210 twisted by the upper strand supplier O are untwisted through the above-described process, the element wires 210 of the upper strand 200 are untwisted, and each of the element wires 210 has the preforming having the constant pitch.

The rotary wheel Q may rotate and may bunch the upper strand 200 and the middle strand 100 together with a middle strand supplier S that does not rotate. Since the middle strand supplier S does not rotate, the middle strand 100, which is twisted and then is flattened, may be bunched to the upper strand 200 without torsion, and a multilayer-stranded flat cord may be manufactured without a shape collapse of the middle strand 100.

In a bunching process of the upper strand 200 and the middle strand 100, the in-out double twist special buncher may be different from a general double twist buncher. That is, in the case of the general double twist buncher, since a process of twisting and untwisting the upper strand 200 is omitted, a middle strand and the upper strand 200 may be bunched together by one rotary wheel, so that the middle strand may be subjected to torsion and may be twisted.

On the contrary, according to the method of manufacturing the steel cord 1 for the tire reinforcement, according to the exemplary embodiment, since the in-out double twist special buncher is used, the middle strand and the upper strand 200 may be bunched together without twisting of the middle strand.

In a case of a steel cord having a general circular cross-sectional structure, since diameters are the same length in a circumferential direction, even when the middle strand is subjected to torsion together with the upper strand, there is no problem in manufacturing a product. However, in a case of a flat cord, since a large diameter and a small diameter having different lengths exist, when the flat cord is subjected to torsion, a shape of a product may be deformed.

Therefore, according to the method of manufacturing the steel cord 1 for the tire reinforcement, when stranding is performed by using the in-out double twist special buncher, a steel cord having a flat middle strand may be manufactured.

A cold-rolling process may be performed on the steel cord 1 for the tire reinforcement that is formed by bunching the upper strand 200 and the middle strand 100 together. Each of the element wires 210 constituting the upper strand 200 may have a flat surface through the cold-rolling process. As the cold-rolling process is performed, a cross-section of the steel cord 1 for the tire reinforcement, according to the exemplary embodiment, may have a non-circular shape. As illustrated in FIG. 2A, the cross-section of the steel cord 1 for the tire reinforcement may have the large diameter M2 and the small diameter M1.

**As** in FIG. 4B, after two core wires 110 are supplied to the middle strand supplier S of the in-out double twist special buncher, the middle strand 100 having a flat surface may be obtained through individual rolling, and the two core wires 110 constituting the middle strand 100 may extend in a parallel to each other in a state in which the two core wires 110 are not twisted to each other. That is, the two core wires 110 may extend in a parallel to each other in a length direction thereof in a state in which the two core wires 110 are not periodically twisted to each other.

At this time, the individual core wire 110 may be flattened at a position a through rolling, and the steel cord 1 for the tire reinforcement having a cross-section as illustrated in FIG. 2B may be manufactured through such a manufacturing process.

There may be a difference between the methods of manufacturing the steel cord 1 for the tire reinforcement of FIGS. 4A and 4B as follows. In FIG. 4A, the twisted middle strand 100 may be rolled to manufacture the steel cord 1 for the tire reinforcement in the in-out double twist special buncher, and in FIG. 4B, each of the core wires 110 in the middle strand 100, which are not twisted, may be rolled to manufacture the steel cord 1 for the tire reinforcement in the in-out double twist special buncher. At this time, since the middle strand 100 is not subjected to torsion by the middle strand supplier S and is bunched to the upper strand 200, it may be understood that the upper strand 200 surrounds the untwisted middle strand 100 in a state in which the core wires 110 are not twisted to each other.

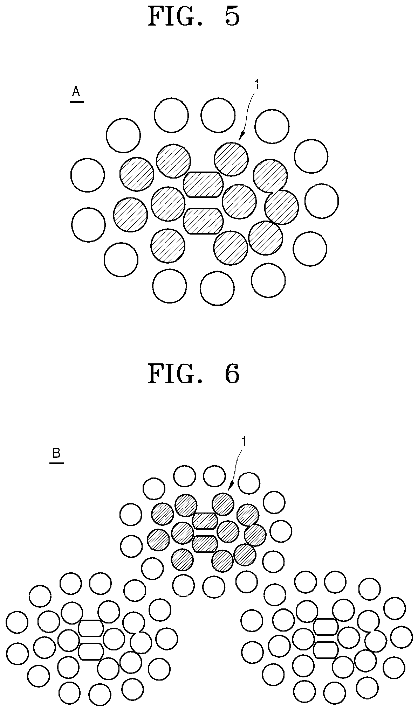

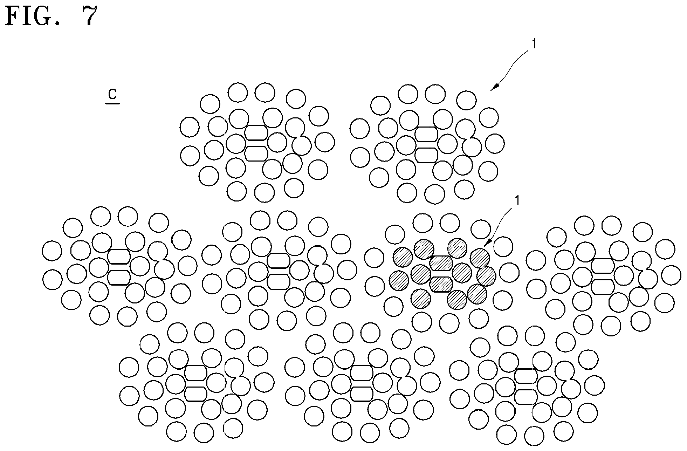

FIGS. 5 to 7 are cross-sectional views of a multilayer-stranded structure, a multi-stranded structure, and a multiple-layer stranded structure, which include the steel cord 1 for the tire reinforcement, according to the exemplary embodiment.

Referring to FIGS. 5 to 7, the steel cord 1 for the tire reinforcement, according to the exemplary embodiment, may be used included in each of a steel cord A for a tire reinforcement having a multilayer-stranded structure, a steel cord B for a tire reinforcement having the multi-stranded structure, and a steel cord C for a tire reinforcement having the multiple-layer stranded structure. At this time, the multiple-layer stranded structure may be defined to have a structure in which the multilayer-stranded structure and the multi-stranded structure are mixed. For example, the steel cord 1 for the tire reinforcement, according to the exemplary embodiment, may be used as a middle strand of the steel cord A for the tire reinforcement having the multilayer-stranded structure or may constitute a portion of the steel cord B for the tire reinforcement having the multi-stranded structure or a portion of the steel cord C for the tire reinforcement having the multiple-layer stranded structure. However, the exemplary embodiment is not limited thereto.

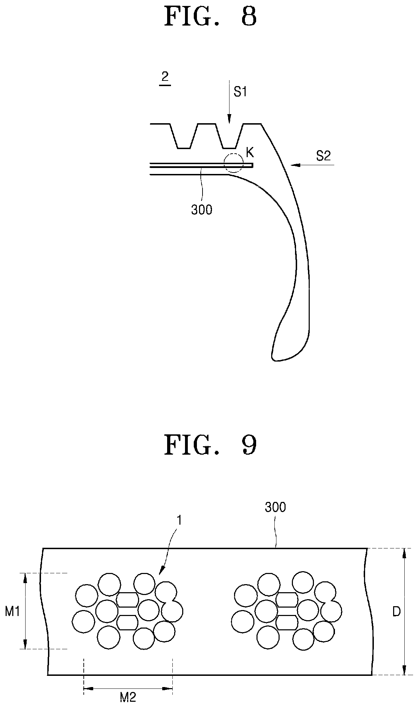

FIG. 8 is a partial cross-sectional view of a tire 2 including the steel cord 1 for the tire reinforcement, according to the exemplary embodiment, and FIG. 9 is a partial enlarged view of a region k illustrated in FIG. 8.

Referring to FIGS. 8 to 9, the tire 2, which includes the steel cord 1 for the tire reinforcement, according to the exemplary embodiment, may include a belt layer 300, and the steel cord 1 for the tire reinforcement may be embedded in the belt layer 300.

The belt layer 300 may reduce an impact from the outside and concurrently, may prevent a crack or damage outside of the tire 2 from directly reaching an inner member of the tire 2. The belt layer 300 may be formed by generally covering the steel cord 1 for the tire reinforcement with rubber. The rubber may include at least one selected from the group consisting of natural rubber and synthetic rubber and may include mixed rubber obtained by mixing the natural rubber and the synthetic rubber at a constant ratio.

The belt layer 300 may be formed in a single layer, or a multi-layer but is not limited thereto. The belt layer 300 may have a plurality of layers so as to respectively perform a role for protecting the tire 2 from a load or an impact applied to the tire 2 and a role for protecting the inner member of the tire 2 from damage from the outside.

Referring to FIG. 9, the steel cord 1 for the tire reinforcement, according to the exemplary embodiment, may be embedded in the rubber such that a small diameter direction of the steel cord 1 for the tire reinforcement approximately matches a radial direction of the tire 2.

That is, since the steel cord 1 for the tire reinforcement, according to the exemplary embodiment, may be embedded in the rubber such that the thin small diameter direction approximately matches the radius direction of the tire 2, that is, a thickness direction of the belt layer 300, a thickness D of the belt layer 300 may be decreased, thereby reducing an amount of rubber required for burying the steel cord 1 for the tire reinforcement and thereby lightening the tire 2. The required amount of the rubber may be reduced, thereby reducing the manufacturing costs of the tire 2.

As illustrated in FIG. 8, at the time of driving a vehicle, the belt layer 300 included in the tire 2 may receive a first bending stress S1 in the radius direction of the tire 2 and may receive a second bending stress S2 in a rotation axis direction of the tire 2. Since the steel cord 1 for the tire reinforcement, according to the exemplary embodiment, is embedded in the rubber such that the small diameter direction of the steel cord 1 for the tire reinforcement approximately matches the radial direction of the tire 2, the steel cord 1 for the tire reinforcement may flexibly cope with the first bending stress S1 applied in the radius direction of the tire 2. Therefore, at the time of driving the vehicle, the steel cord 1 for the tire reinforcement may more easily absorb an impact due to an unevenness formed on a driving surface to achieve an excellent riding quality.

Since the steel cord 1 for the tire reinforcement, according to the exemplary embodiment, is embedded in the rubber such that the large diameter direction of the steel cord 1 for the tire reinforcement approximately matches the rotation axis direction of the tire 2, the steel cord 1 for the tire reinforcement may have a large stiffness with respect to the second bending stress S2 applied in the rotation axis direction of the tire 2. Therefore, in a case of cornering at the time of driving the vehicle, a high cornering force may be generated to prevent a phenomenon in which the tire 2 leans in one direction, thereby allowing excellent cornering.

According to the steel cord for the tire reinforcement, according to the exemplary embodiment, each of the core wires constituting the middle strand may have the flat surface, and the core wires are stranded so as to approximately come into surface contact with each other through the flat surface, thereby reducing abrasion caused by fretting, obtaining an excellent fatigue resistance, and preventing moisture and corrosion from spreading inside the steel cord due to excellent rubber permeability to increase a life span and improve reliability. In addition, the steel cord for the tire reinforcement may be lightened, thereby achieving a stress distribution effect due to anisotropy.

Furthermore, a process of forming the middle strand having a flat shape and a process of stranding the upper strand may be performed at the same time, thereby improving productivity and reducing manufacturing costs.

In addition, the middle strand and the upper strand may be bunched together without torsion of the middle strand at the time of stranding, and the element wires constituting the upper strand may be stranded at a same twisting factor according to a time, thereby constituting a stable shape. That is, as the middle strand 100 having the flat surface is supplied without torsion, a shape of the middle strand 100 may not be collapsed, so that a multilayer-stranded flat cord having a stable structure may be manufactured.

In the tire including the steel cord for the tire reinforcement, according to the exemplary embodiment, the steel cord for the tire reinforcement has a non-circular cross-section and when the steel cord for the tire reinforcement is embedded in rubber in a small diameter direction, it may be possible to reduce a thickness of the rubber without a significant reduction in strength compared to a circular steel cord for a tire reinforcement, thereby reducing production costs. Furthermore, the steel cord for the tire reinforcement may have a low bending strength in a small diameter direction thereof to improve an excellent riding quality and may have a high bending strength in a large diameter direction thereof to generate a high cornering force at the time of cornering and enable stable cornering, thereby improving riding and steering.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope of the inventive concept as defined by the following claims.

## Claims

1. A method of manufacturing a steel cord (1) for a tire reinforcement comprising a middle strand (100) formed by stranding a plurality of core wires (110) and disposed in a core region inside the steel cord (1) and an upper strand (200) formed by stranding a plurality of element wires (210) and stranded on an outer surface of the middle strand (100), the method is **characterized in that** the method comprises:
(a) twisting the plurality of element wires constituting the upper strand (200) by rotating a rotary wheel (Q) of an upper strand supplier (O);
(b) untwisting the plurality of the twisted element wires (210) in an untwisting machine (P) to form the element wires (210) having a preforming having a predetermined pitch;
(c) supplying the middle strand (100) in a middle strand supplier (S) that does not rotate and stranding the element wires (210) having the preforming on the middle strand (100) to form the upper strand (200) on the middle strand (100), so that the middle strand (100) is bunched with the upper strand (200) without torsion, wherein the supplying of the middle strand (100) includes
(d) stranding the plurality of core wires (110) to form the middle strand (100); and
(e) forming a flat surface (112) between the plurality of core wires (110) by pressurizing the middle strand (100), wherein the flat surface (112) is a region having an infinite curvature or having a radius of curvature that is greater than a radius of curvature of other regions.

2. A method of manufacturing a steel cord (1) for a tire reinforcement comprising a middle strand (100) formed by a plurality of core wires (110) and disposed in a core region inside the steel cord (1) and an upper strand (200) formed by stranding a plurality of element wires (210) and stranded on an outer surface of the middle strand (100), the method is **characterized in that** the method comprises:
(a) twisting the plurality of element wires (210) constituting the upper strand (200) by rotating a rotary wheel (Q) of an upper strand supplier (O);
(b) untwisting the plurality of the twisted element wires (210) in an untwisting machine (P) to form the element wires (210) having a preforming having a predetermined pitch;
(c) forming a flat surface (112) at the plurality of core wires (110) by rolling each of the plurality of core wires (110), wherein the flat surface (112) is a region having an infinite curvature or having a radius of curvature that is greater than a radius of curvature of other regions;
(d) forming the middle strand (100) including the plurality of core wires (110) coming into surface contact with each other through the flat surface (112) and extending in parallel to each other;
(e) supplying the middle strand (100) in a middle strand supplier (S) that does not rotate and stranding the element wires (210) having the preforming on the middle strand (100) to form the upper strand (200) on the middle strand (100), so that the middle strand (100) is bunched with the upper strand (200) without torsion.

## Patentansprüche

1. Verfahren zur Herstellung eines Stahlseils (1) zur Reifenverstärkung, wobei das Stahlseil einen durch Verseilen mehrerer Kerndrähte (110) ausgebildeten und in einem Kernbereich des Stahlseils (1) angeordneten Mittelstrang (100) und einen durch Verseilen mehrerer Elementardrähte (210) ausgebildeten und auf einer Außenfläche des Mittelstrangs (100) verseilten Oberstrang (200) aufweist, wobei das Verfahren die folgenden Schritte umfasst:
(a) Verdrehen der mehreren Elementardrähte, aus denen der Oberstrang (200) besteht, durch Drehen eines Drehrads (Q) einer Oberstrangzufuhr (O);
(b) Aufdrehen der mehreren Elementardrähte (210) in einer Aufdrehmaschine (P) zur Ausbildung der Elementardrähte (210) mit einer eine vorgegebene Steigung aufweisenden Vorform;
(c) Zuführen des Mittelstrangs (100) in eine nicht rotierende Mittelstrangzufuhr (S) und Verseilen der vorgeformten Elementardrähte (210) an den Mittelstrang (100) zur Ausbildung des Oberstrangs (200) auf dem Mittelstrang (100), sodass der Mittelstrang (100) ohne Verdrehung mit dem Oberstrang (200) gebündelt wird, wobei das Zuführen des Mittelstrangs (100) die folgenden Schritte umfasst;
(d) Verseilen der mehreren Kerndrähte (110) zur Ausbildung des Mittelstrangs (100); und
(e) Ausbilden einer flachen Oberfläche (112) zwischen den mehreren Kerndrähten (110) durch Unterdrucksetzen des Mittelstrangs (100), wobei die flache Oberfläche ein Bereich mit unendlicher Krümmung ist oder einen zum Krümmungsradius anderer Bereiche größeren Krümmungsradius aufweist.

2. Verfahren zur Herstellung eines Stahlseils (1) zur Reifenverstärkung, wobei das Stahlseil einen durch Verseilen mehrerer Kerndrähte (110) ausgebildeten und in einem Kernbereich des Stahlseils (1) angeordneten Mittelstrang (100) und einen durch Verseilen mehrerer Elementardrähte (210) ausgebildeten und auf einer Außenfläche des Mittelstrangs (100) verseilten Oberstrang (200) aufweist, wobei das Verfahren die folgenden Schritte umfasst:
(a) Verdrehen der mehreren Elementardrähte, aus denen der Oberstrang (200) besteht, durch Drehen eines Drehrads (Q) einer Oberstrangzufuhr (O);
(b) Aufdrehen der mehreren Elementardrähte (210) in einer Aufdrehmaschine (P) zur Ausbildung der Elementardrähte (210) mit einer eine vorgegebene Steigung aufweisenden Vorform;
(c) Ausbilden einer flachen Oberfläche (112) an den mehreren Kerndrähten (110) durch Walzen jedes der mehreren Kerndrähte (110), wobei die flache Oberfläche ein Bereich mit unendlicher Krümmung ist oder einen zum Krümmungsradius anderer Bereiche größeren Krümmungsradius aufweist;
(d) Ausbilden des Mittelstrangs (100) mit den mehreren Kerndrähten (110), die durch die flache Oberfläche (112) miteinander in Oberflächenkontakt kommen und parallel zueinander angeordnet sind;
(e) Zuführen des Mittelstrangs (100) in eine nicht rotierende Mittelstrangzufuhr (S) und Verseilen der vorgeformten Elementardrähte (210) an den Mittelstrang (100) zur Ausbildung des Oberstrangs (200) auf dem Mittelstrang (100), sodass der Mittelstrang (100) ohne Verdrehung mit dem Oberstrang (200) gebündelt wird.

## Revendications

1. Procédé de fabrication d'un câble en acier (1) pour le renforcement de pneu, le câble en acier comprenant un cordon central (100) formé par toronnage d'une pluralité de fils centraux (110) et disposé dans une partie centrale du câble en acier (1), et un cordon supérieur (200) formé par toronnage d'une pluralité de fils élémentaires (210) et toronné sur une surface extérieure du cordon central (100), ledit procédé comprenant les étapes suivantes :
(a) tordre la pluralité de fils élémentaires constituant le cordon supérieur (200) en faisant tourner une roue rotative (Q) d'un dispositif d'alimentation (O) de cordon supérieur ;
(b) détordre la pluralité de fils élémentaires (210) dans une machine de détorsion (P) pour former les fils élémentaires (210) en une préforme avec un pas prédéterminé ;
(c) alimentation du cordon central (100) dans un dispositif d'alimentation (S) de cordon central non rotatif et toronnage des fils élémentaires (210) en préforme sur le cordon central (100) pour former le cordon supérieur (200) sur le cordon central (100) de sorte que le cordon central (100) est groupé sans torsion avec le cordon supérieur (200), l'alimentation du cordon central (100) comprenant les étapes suivantes ;
(d) toronnage de la pluralité de fils centraux (110) pour former le cordon central (100) ; et
(e) former une surface plane (112) entre la pluralité de fils centraux (110) en pressurisant le cordon central (100), la surface plane (112) étant une région de courbure infinie ou ayant un rayon de courbure supérieur au rayon de courbure d'autres régions.

2. Procédé de fabrication d'un câble en acier (1) pour le renforcement de pneu, le câble en acier comprenant un cordon central (100) formé par toronnage d'une pluralité de fils centraux (110) et disposé dans une partie centrale du câble en acier (1), et un cordon supérieur (200) formé par toronnage d'une pluralité de fils élémentaires (210) et toronné sur une surface extérieure du cordon central (100), ledit procédé comprenant les étapes suivantes :
(a) tordre la pluralité de fils élémentaires constituant le cordon supérieur (200) en faisant tourner une roue rotative (Q) d'un dispositif d'alimentation (O) de cordon supérieur ;
(b) détordre de la pluralité de fils élémentaires (210) dans une machine de détorsion (P) pour former les fils élémentaires (210) en une préforme avec un pas prédéterminé ;
(c) former une surface plane (112) sur la pluralité de fils centraux (110) en laminant chacun de la pluralité de fils centraux (110), la surface plane (112) étant une région de courbure infinie ou ayant un rayon de courbure supérieur au rayon de courbure d'autres régions ;
(d) former le cordon central (100) avec la pluralité de fils centraux (110) en contact surfacique les uns avec les autres par la surface plane (112) et alignés parallèlement les uns aux autres ;
(e) alimentation du cordon central (100) dans un dispositif d'alimentation (S) de cordon central non rotatif et toronnage des fils élémentaires (210) en préforme sur le cordon central (100) pour former le cordon supérieur (200) sur le cordon centrale (100) de sorte que le cordon central (100) est groupé sans torsion avec le cordon supérieur (200).
